## Europäisches Patentamt

## European Patent Office

## Office européen des brevets

(11) Veröffentlichungsnummer: **0 286 805 B1**

## EUROPÄISCHE PATENTSCHRIFT

(45) Veröffentlichungstag der Patentschrift: **24.04.91**

(51) Int. Cl.⁵: **F16C 11/06**

(21) Anmeldenummer: **88102678.5**

(22) Anmeldetag: **24.02.88**

(54) **Kugelgelenk.**

(30) Priorität: **11.04.87 DE 3712460**

(43) Veröffentlichungstag der Anmeldung:
**19.10.88 Patentblatt 88/42**

(45) Bekanntmachung des Hinweises auf die
Patenterteilung:
**24.04.91 Patentblatt 91/17**

(84) Benannte Vertragsstaaten:
**DE FR GB IT**

(56) Entgegenhaltungen:
| | |
|---|---|
| DE-A- 2 135 299 | DE-A- 2 752 456 |
| DE-C- 3 341 993 | DE-U- 1 764 871 |
| DE-U- 1 961 833 | FR-A- 1 538 231 |
| US-A- 2 308 073 | US-A- 3 248 955 |
| US-A- 4 572 693 | |

(73) Patentinhaber: **TRW Ehrenreich GmbH & Co.
KG
Hansa-Allee 190
W-4000 Düsseldorf 11(DE)**

(72) Erfinder: **Glatzel, Michael
Weseler Strasse 17
W-4000 Düsseldorf 1(DE)**
Erfinder: **Blumberg, Willy
Am Eisenbrand 20
W-4005 Meerbusch 1(DE)**

(74) Vertreter: **Patentanwälte Dipl.-Ing. Alex Stenger Dipl.-Ing. Wolfram Watzke Dipl.-Ing.
Heinz J. Ring
Kaiser-Friedrich-Ring 70
W-4000 Düsseldorf 11(DE)**

Rank Xerox (UK) Business Services

## Beschreibung

Gegenstand der Erfindung ist ein Kugelgelenk mit einem drehbzw. winkelbeweglich aus einen Gelenkgehäuse herausragenden Gelenkzapfen, wobei die Öffnung zwischen Gelenkgehäuse und Gelenkzapfen Von einen Dichtungsbalg aus einem Elastomer verschlossen ist, der mit einem zapfenseitigen Balgrand dichtend an dem Gelenkzapfen anliegt, der an einem gehäuseseitigen Balgrand mittels eines auf seinen Außenmantel drückenden, in axialer Richtung zwei Stirnseiten aufweisenden Spannringes in einer am Gelenkgehäuse umlaufenden Ringnut festgelegt ist, und der gehäuseseitige Balgrand einen Innendurchmesser hat, der etwas größer als der Außendurchmesser der Ringnut ist.

Aus dem DE-U- 17 64 871 ist gemäß Abb. 2 eine Kugelgelenk-Staubschutzkappe bekannt, die topfartig ausgebildet ist und mit Hilfe eines Drahtes in einer Nut des Gehäuses festgebunden wird. In Unterschied zum Erfindungsgegenstand weist der gehäuseseitige Balgrand jedoch keine Verdickungen auf, die an den Stirnseiten des Spannringes anliegen. Die in Seite 1, Absatz 5 und Seite 2, Absatz 1 dieser Druckschrift angesprochenen Verstärkungswulste, die dieser Stand der Technik im übrigen zu vermeiden trachtet, sind am Innenumfang des Befestigungsdrahtes angeordnet, denn sie sollen ein Zerschneiden der Kappe durch den Draht verhindern. Sie sind deshalb mit den erfindungsgemäßen Verdickungen, die an den Stirnseiten des Spannringes anliegen, nicht vergleichbar.

Das DE-U- 19 61 833 diente zur Abgrenzung des Anspruchs 1 und offenbart einen elastischen Dichtungsbalg, dessen gehäuseseitiger Balgrand gemäß beigefügter Zeichnung entsprechend einer Gehäusenut vorgeformt ist. Lediglich aus der Zeichnung ist bei besonderem Hinsehen entnehmbar, daß der gehäuseseitige Balgrand eine in Axialrichtung des Dichtungsbalges gesehen außenliegende, umlaufende Verdickung aufweist. Liest man nur den Schutzanspruch 1 so könnte man nach dessen letztem Merkmal, nach dem die "Wandstärke ... bis zur Umfassungstelle des Gehäuserandes gleichbleibend ist" sogar zu dem Ergebnis kommen, daß der gehäuseseitige Balgrand konstante Wandstärke aufweist.

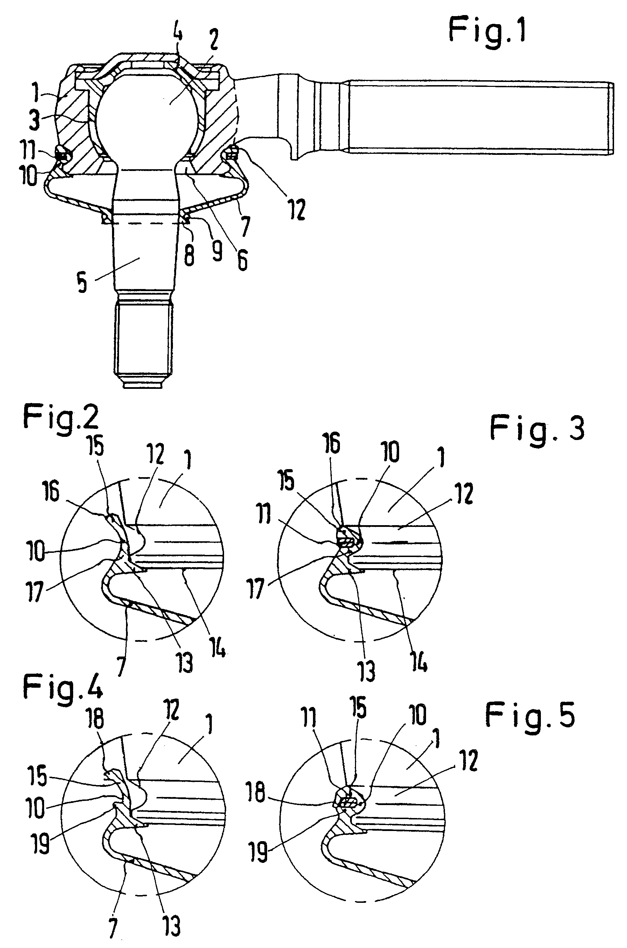

Aus der DE-A- 21 35 299 ist ein weiteres Kugelgelenk bekannt, dessen Dichtungsbalg gehäuseseitig einen entsprechend einer Gehäusenut vorgeformten Balgrand aufweist, der durch Spannelemente in der Gehäusenut gehalten wird. Wie aus der Fig. 2 ersichtlich, kann die Gehäusenut auch als Keilnut ausgebildet sein.

Aus der DE-C- 33 41 993 ist bereits eine Befestigung eines Dichtungsbalges am Gelenkgehäuse bekannt, bei welcher der gehäuseseitige Balgrand des Dichtungsbalges eine nach außen gewölbte, umlaufende Falte bildet, welche sich unter dem Druck des Spannringes in einer Ringnut des Gelenkgehäuses streckt, so daß eine verbesserte Dichtwirkung erzielt wird, ohne die Spannkraft des Spannringes im Vergleich zu den bekannten Befestigungen zu erhöhen. Der vorbekannte Dichtungsbalg ist jedoch nicht einfach über der Ringnut positionierbar, da der Balgrand eine der U-Form der Ringnut angepasste Profilierung aufweist und vor der Montage des Spannringes in die Ringnut eingedrückt werden muß. Darüber hinaus ist der Balgrand nicht besonders vor einem Herausziehen aus seiner Position geschützt.

Aus der DE-A- 27 52 456 ist ein Kugelgelenk bekannt, bei dem der Dichtungsbalg an seinem gehäuseseitigen Balgrand in einer Nut mit Keilprofil gehaltert ist, welche von einem Tragring gebildet wird. Bei diesem Dichtungsbalg muß der gehäuseseitige Balgrand ebenfalls in seine Position der Keilnut gedrückt werden und ist er nur unzureichend vor einem Herausziehen aus dieser Position gesichert.

Davon ausgehend liegt der Erfindung die **Aufgabe** zugrunde, ein Kugelgelenk mit einer verbesserten befestigung des gehäuseseitigen Balgrandes des Dichtungsbalges zu schaffen, wobei der gehäuseseitige Balgrand insbesondere vor der Montage des Spannringes leichter positionierbar ist und bei montiertem Spannring gegen ein Herausziehen aus der Ringnut wirksam gesichert ist.

Zur technischen **Lösung** dieser Aufgabe wird vorgeschlagen, daß der gehäuseseitige Balgrand eine in Axialrichtung des Dichtungsbalges gesehen außenliegende, umlaufende Verdickung aufweist, die an einer Stirnseite des Spannringes anliegt und daß der gehäuseseitige Balgrand eine weitere, in Axialrichtung des Dichtungsbalges gesehen innenliegende, umlaufende Verdickung aufweist, die an einer Stirnseite des Spannringes anliegt, so daß an beiden Stirnseiten des Spannringes eine Verdickung zur Anlage kommt.

Ein erfindungsgemäßes Kugelgelenk ist mit seinem Dichtungsbalg einfach über der Ringnut eines Gelenkgehäuses positionierbar, indem der Dichtungsbalg mit seinem, vor seiner Festlegung in der Ringnut etwa zylindrisch ausgebildeten, gehäuseseitigen Balgrand über die Ringnut geschoben wird. Dies ist ohne nennenswerten Kraftaufwand möglich, weil der Innendurchmesser des zylindrisch ausgebildeten Balgrandes etwas größer als der Außendurchmesser der Ringnut ist. Sodann wird ein Spannring über den Dichtungsbalg geschoben, der beim Zusammenschnappen den gehäuseseitigen Balgrand radial in die Ringnut einzieht und dichtend gegen das Gelenkgehäuse drückt. Dabei kommen die umlaufenden Verdickungen am gehäuseseitigen Balgrand zur Anlage an den Stirnseiten des Spannringes. Diese Verdickungen können praktisch nicht durch eine in Richtung der Zapfenachse wirkende Kraft aus dem Ringspalt zwischen Spannring und Ringnut gezogen oder gedrückt werden. Der erfindungsgemäße Dichtungsbalg ist deshalb einfach montierbar und wirksam an einem Herausziehen oder Herausdrücken aus der Ringnut des Gelenkgehäuses gehindert. Darüber hinaus ist der Dichtungsbalg mit großer Vorspannung in die Ringnut "stopfbar", weil er sich erst bei radialem Zusammenziehen des Spannringes um diesen legt, so daß viel Balgmaterial in der Ringnut verdichtet werden kann, ohne das Einsetzen des Spannringes zu behindern.

Bei einer bevorzugten Augestaltung der Erfindung ist die in Axialrichtung des Dichtungsbalges gesehen außenliegende Verdickung des gehäuseseitigen Balgrandes im Querschnitt etwa keilförmig mit zum Balgende hin sich vergrößernder Wandstärke ausgebildet, so daß bei montiertem Dichtungsbalg der Balgrand zwischen Spannring und Gelenkgehäuse eingekeilt wird.

Bei einer weiteren Ausgestaltung ist die in Axialrichtung des Dichtungsbalges gesehen innenliegende Verdickung des gehäuseseitigen Balgrandes im Querschnitt etwa keilförmig mit vom Balgende weg sich vergrößernder Wandstärke ausgebildet, so daß der Balgrand beidseitig zwischen Spannring und Gelenkgehäuse eingekeilt ist.

Bei einer weiteren Ausgestaltung ist die umlaufende Ringnut des Gelenkgehäuses als Keilnut ausgebildet, wodurch eine (zusätzliche) Keilwirkung auf den Balgrand ausgeübt werden kann. Eine Keilnut ist fertigungstechnisch besonders günstig, weil sie mittels Wendeplatten herstellbar ist. Besonders günstig ist es, wenn die Keilnut einen Öffnungswinkel von 60° aufweist, weil dann 60°-Wendeplatten zum Einsatz kommen können.

Bei einer weiteren Ausgestaltung ist die Summe der Keilwinkel der beiden keilförmigen Verdickungen des gehäuseseitigen Balgrandes des Dichtungsbalges etwa dem Öffnungswinkel der Keilnut gleich, wodurch eine optimale Reibwirkung auf die Außenflächen der keilförmigen Verdickungen erzielt wird.

Bei einer weiteren Ausgestaltung weist der Dichtungsbalg angrenzend an den vor seiner Festlegung in der Ringnut etwa zylindrisch ausgebildeten gehäuseseitigen Balgrand eine innen umlaufende Lippe auf, die an der Stirnseite des Gelenkgehäuses anliegt, aus der der Gelenkzapfen herausragt. Durch die Lippe wird bei der Montage die Positionierung des gehäuseseitigen Balgrandes erleichtert und durch das Einziehen des Dichtungsbalges in die Ringnut über die einwirkenden Spannringkräfte eine Zugwirkung auf die umlaufende Lippe und somit eine zusätzliche Dichtfunktion erreicht.

Schließlich ist bei einer Ausgestaltung der Erfindung vorgesehen, daß der Dichtungsbalg angrenzend an den vor seiner Festlegung in der Ringnut etwa zylindrisch ausgebildeten gehäuseseitigen Balgrand an seinem Außenmantel eine oder mehrere umlaufende Lippen oder Wülste aufweist, die bei festgelegtem Dichtungsbalg den Spannring außen abdecken und durch Abdichtung vor Korrosion schützen.

Weitere Einzelheiten und Vorteil des Gegenstandes der Erfindung ergeben sich aus der nachfolgenden Beschreibung der Zeichnungen, die zwei bevorzugte Ausführungsformen eines erfindungsgemäßen Kugelgelenkes mit verbesserter Balgbefestigung zeigen. In den Zeichnungen zeigen:

Fig. 1    ein Kugelgelenk mit einem Dichtungsbalg im Längsschnitt;

Fig. 2    einen vergrößerten Ausschnitt der Ringnut desselben Kugelgelenkes mit positioniertem Dichtungsbalg ohne Spannring im Querschnitt;

Fig. 3    denselben Ausschnitt mit eingesetztem Spannring;

Fig. 4    einen vergrößerten Ausschnitt der Ringnut des Gelenkgehäuses mit aufgezogenem Dichtungsbalg mit lippen- und wulstförmigem Ansatz ohne Spannring im Querschnitt;

Fig. 5    denselben Ausschnitt mit eingesetztem Spannring.

Das Kugelgelenk hat ein Gelenkgehäuse 1 und einen winkel- bzw. drehbeweglich in dieses eingesetzten Kugelkopf 2, der von einer Lagerschale 3 mit deckelseitig angeformten, elastischen Federn 4 im Gelenkgehäuse 1 gehalten ist. Aus dem Gelenkgehäuse 1 ragt ein an den Kugelkopf 2 angeformter Gelenkzapfen 5 heraus, dessen Ausschlag von einer Öffnung 6 des Gelenkgehäuses 1 begrenzt ist.

Die Öffnung 6 wird von einem Dichtungsbalg 7 aus einem Elastomer verschlossen, der mit einem zapfenseitigen Balgrand 8 unter der Vorspannung eines zapfenseitigen Spannringes 9 an dem Gelenkzapfen 5 anliegt. Ein gehäuseseitiger Balgrand 10 des Dichtungsbalges 7 ist mittels eines gehäuseseitigen Spannringes 11 in einer außen am Gelenkgehäuse 1 umlaufenden Ringnut 12 dichtend festgelegt. Die Ringnut 12 befindet sich in unmittelbarer Nachbarschaft der mit der Öffnung 6 für den Gelenkzapfen 5 versehenen Stirnseite des Gelenkgehäuses 1.

Für die Erläuterung von Einzelheiten der Befestigung des gehäuseseitigen Balgrandes 10 am Gelenkgehäuse 1 wird auf die Fig. 2 und 3 Bezug genommen. Wie diese Darstellungen zeigen, ist die Ringnut 12 eine Keilnut mit einem Öffnungswinkel von etwa 60°. Wie in der Fig. 2 dargestellt, wird der Dichtungsbalg 7 bei der Montage zunächst mit seinem gehäuseseitigen Balgrand 10 unmittelbar über der Ringnut 12 positioniert. Dies ist auf einfache Weise möglich, weil der Balgrand 10 etwa zylindrish ausgebildet ist und sein Innendurchmesser etwas größer als der Außendurchmesser der Ringnut 12 ist, der mit dem Außendurchmesser der angrenzenden Abschnitte des Gelenkgehäuses 1 übereinstimmt. Die Positionierung des Balgrandes 10 wird ferner dadurch erleichtert, daß der Dichtungsbalg 7 angrenzend an den etwa zylindrisch ausgebildeten Balgrand 10 eine innen umlaufende Lippe 13 aufweist, die an einer angefarcten Stirnseite 14 des Gelenkgehäuses 1 herausragt, wobei die Stirnseite 14 diejenige ist, aus der der Gelenkzapfen 5 herausragt.

Der gehäuseseitige Balgrand 10 weist eine ungleichmäßige Wandstärke auf. In axialer Richtung des Dichtungsbalges 7 gesehen ist der Balgrand 10 nämlich mit einer außenliegenden, umlaufenden Verdickung 15 versehen. Die Verdickung 15 ist im Querschnitt keilförmig mit zu einem Balgende 16 hin sich vergrößernder Wandstärke.

Angrenzend an diese erste Verdickung 15 weist der Balgrand 10 eine weitere umlaufende Verdickung 17 auf, die in Axialrichtung des Dichtungsbalges 7 gesehen und im Vergleich zu der ersten Verdickung 15 innen liegt. Die Verdickung 17 ist im Querschnitt ebenfalls etwa keilförmig ausgebildet, wobei sich deren Wandstärke vom Balgende 16 weg vergrößert. Zwischen den Verdickungen 15 und 17 ist somit ein Minimum der Wandstärke des Balgrandes 10 ausgebildet, welches genau über der Symmetrieebene der Ringnut 12 angeordnet ist.

Zum Festlegen des gehäuseseitigen Balgrandes 10 wird der gehäuseseitige Spannring 11 gespreizt über den Außenmantel des Dichtungsbalges 7 geschoben, bis er in der Symmetrieebene der Ringnut 12 liegt. Dann wird der Spannring 11 entspannt, so daß er auf dem Außenmantel des gehäuseseitigen Balgrandes 10 zur Anlage kommt und den Balgrand 10 zumindest teilweise radial in die Ringnut 12 einzieht und dichtend gegen das Gelenkgehäuse 1 drückt. Diese Befestigungsposition des gehäuseseitigen Balgrandes 10 ist in der Fig. 3 dargestellt.

Aus der Fig. 3 ist ferner ersichtlich, daß die keilförmigen Verdickungen 15,17 des Balgrandes 10 den zur Symmetrieachse der Ringnut 12 hin konvergierenden Spalt zwischen Spannring 11 und Ringnut 12 genau ausfüllen. Dies ist möglich, weil die Summe der Keilwinkel der beiden keilförmigen Verdickungen 15,17 etwa dem Öffnungswinkel der als Keilnute ausgebildeten Ringnut 12 entspricht. Hierdurch wird eine optimal durch Keilwirkung unterstützte Festlegung des gehäuseseitigen Balgrandes 10 in der Ringnut 12 erzielt.

Wenn der Spannring 11 den Balgrand 10 in die Ringnut 12 einzieht, stellt sich im Balgrand 10 eine Zugspannung ein, welche die Lippe 13 dichtend gegen die angefarcte Stirnseite 14 drückt. Somit wird bei dem erfindungsgemäßen Kugelgelenk eine Dichtfläche zwischen gehäuseseitigem Balgrand 10 und Gelenkgehäuse 1 erzeugt, die praktisch vom Balgende 16 bis zum Innendurchmesser der Lippe 13 verläuft.

Bei der nachfolgenden Erläuterung der in den Fig. 4 und 5 dargestellten Variante sind die der vorstehend erläuterten Ausführungsform entsprechenden Teile mit den gleichen Bezugsziffern versehen. Der in der Fig. 4 über der Ringnut 12 positionierte gehäuseseitige Balgrand 10 weist eine auf die Axialrichtung des Dichtungsbalges 7 gesehen außenliegende, umlaufende Verdickung 15 auf. Innen befindet sich eine umlaufende Lippe 13 zum Positionieren und zur zusätzlichen Abdichtung.

Angrenzend an den etwa zylindrisch ausgebildeten gehäuseseitigen Balgrand 10 hat der Dichtungsbalg 7 an seinem Außenmantel in axialer Richtung des Dichtungsbalges 7 gesehen eine umlaufende Lippe 18 und in axialer Richtung gesehen weiter innen einen umlaufenden Wulst 19. Wie aus der Zeichnung ersichtlich, lässt sich bequem ein gehäuseseitiger Spannring zwischen der Lippe 18 und dem Wulst 19 anbringen, weil Lippe 18 und Wulst 19 zunächst etwa senkrecht von dem etwa zylindrisch ausgebildeten Balgrand 10 abstehen.

Wie aus der Fig. 5 ersichtlich ist, wird der gehäuseseitige Balgrand 10 von dem Spannring 11 in der Weise in die Ringnut 12 eingezogen, daß der Wulst 19 an der unteren Stirnseite des Spannringes 11 anliegt und die Lippe 18 den Außenumfang des Spannringes überdeckt und diesen vor Korrosion schützt. Die Verdickung 15 ist, wie bereits in der Fig. 3 dargestellt, zwischen der Ringnut 12 und der oberen Stirnseite des Spannringes 11 eingekeilt.

**Bezugszeichenliste**

1 Gelenkgehäuse
2 Kugelkopf
3 Lagerschale
4 Feder
5 Gelenkzapfen
6 Öffnung
7 Dichtungsbalg
8 Balgrand (zapfenseitig)
9 Spannring (zapfenseitig)
10 Balgrand (gehäuseseitig)
11 Spannring (gehäuseseitig)
12 Ringnut
13 Lippe
14 Stirnseite
15 Verdickung
16 Balgende

17 Verdickung
18 Lippe
19 Wulst

## Ansprüche

1. Kugelgelenk mit einem dreh- bzw. winkelbeweglich aus einem Gelenkgehäuse (1) herausragenden Gelenkzapfen (5), wobei die Öffnung (6) zwischen Gelenkgehäuse (1) und Gelenkzapfen (5) von einem Dichtungsbalg (7) aus einem Elastomer verschlossen ist,
der mit einem zapfenseitigen Balgrand (8) dichtend an dem Gelenkzapfen (5) anliegt,
der an einem gehäuseseitigen Balgrand (10) mittels eines auf seinen Außenmantel drückenden, in axialer Richtung zwei Stirnseiten aufweisenden Spannringes (11) in einer am Gelenkgehäuse (1) umlaufenden Ringnut (12) festgelegt ist,
und der gehäuseseitige Balgrand (10) einen Innendurchmesser hat, der etwas größer als der Außendurchmesser der Ringnut (12) ist, **dadurch gekennzeichnet,**
daß der gehäuseseitige Balgrand (10) vor seiner Festlegung in der Ringnut (12) etwa zylindrisch ausgebildet ist und während der Montage des Dichtungsbalges (7) durch den Spannring (11) in die Ringnut (12) eingezogen wird,
daß der gehäuseseitige Balgrand (10) eine in Axialrichtung des Dichtungsbalges (7) gesehen außenliegende, umlaufende Verdickung (15) aufweist, die nach der Montage des Dichtungsbalges (7) an einer Stirnseite des Spannringes (11) anliegt, daß der gehäuseseitige Balgrand (10) eine weitere, in Axialrichtung des Dichtungsbalges (7) gesehen innenliegende, umlaufende Verdickung (17) aufweist, die nach der Montage des Dichtungsbalges (7) an einer Stirnseite des Spannringes (11) anliegt, so daß an beiden Stirnseiten des Spannringes (11) eine Verdickung (15,17) zur Anlage kommt.

2. Kugelgelenk nach Anspruch 1, dadurch gekennzeichnet, daß die in Axialrichtung des Dichtungsbalges gesehen außenliegende Verdickung (15) des gehäuseseitigen Balgrandes (10) im Querschnitt etwa keilförmig mit zum Balgende (16) hin sich vergrößernder Wandstärke ausgebildet ist.

3. Kugelgelenk nach einem der Ansprüche 1 bis 2, dadurch gekennzeichnet, daß die in Axialrichtung des Dichtungsbalges gesehen innenliegende Verdickung (17) des gehäuseseitigen Balgrandes (10) in Querschnitt etwa keilförmig mit vom Balgende (16) weg sich vergrößernder Wandstärke ausgebildet ist.

4. Kugelgelenk nach einem der Ansprüche 1 bis 3, dadurch gekennzeichnet, daß die umlaufende Ringnut (12) des Gelenkgehäuses (1) als Keilnut ausgebildet ist.

5. Kugelgelenk nach Anspruch 4, dadurch gekennzeichnet, daß die Keilnut einen Öffnungswinkel von 60° aufweist.

6. Kugelgelenk nach einem der Ansprüche 4 und 5 in Verbindung mit Anspruch 2 und 3, dadurch gekennzeichnet, daß die Summe der Keilwinkel der beiden keilförmigen Verdickungen (15,17) des gehäuseseitigen Balgrandes (10) des Dichtungsbalges (7) etwa dem Öffnungswinkel der Keilnut gleich ist.

7. Kugelgelenk nach einem der Ansprüche 1 bis 6, dadurch gekennzeichnet, daß der Dichtungsbalg (7) angrenzend an den vor seiner Festlegung in der Ringnut (12) etwa zylindrisch ausgebildeten gehäuseseitigen Balgrand (10) eine innen umlaufende Lippe (13) aufweist, die an der Stirnseite (14) des Gelenkgehäuses (1) anliegt, aus der der Gelenkzapfen (5) herausragt.

8. Kugelgelenk nach einem der Ansprüche 1 bis 7, dadurch gekennzeichnet, daß der Dichtungsbalg (7) angrenzend an den vor seiner Festlegung in der Ringnut (12) etwa zylindrisch ausgebildeten gehäuseseitigen Balgrand (10) an seinem Außenmantel einen oder mehrere umlaufende Lippen (18) oder Wülste (19) aufweist, die bei festgelegtem Dichtungsbalg (7) den Spannring (11) außen abdecken.

## Claims

1. Ball joint having a ball pivot (15) projecting with rotary and angular movement from a joint housing (1), the opening (6) between the joint housing (1) and the ball pivot (5) being sealed by a sealing bellows (7), made of an elastomer, which rests with a pivot-side bellows edge (8) on the ball pivot (5) in a sealing manner, which is fixed at a housing-side bellows edge (10) in an annular groove (12) extending around the joint housing (1) by means of a clamping ring (11) pressing on its outer surface and having two end faces in the axial direction, and the housing-side bellows edge (10) having an inside diameter which is slightly larger than the outside diameter of the annular groove (12), characterised in that the housing-side bellows edge (10) is of approximately cylindrical construction prior to its being fixed in the annular groove (12) and is pulled into the annular groove (12) by the clamping ring (11) during assembly of the sealing bellows (7), in that the housing-side bellows edge (10) has a circumferential thickening (15) on the outside, seen in the axial direction of the sealing bellows (7), which thickening rests on one end face of the clamping ring (11) after assembly of the sealing bellows (7), in that the housing-side bellows edge (10) has a further circumferential thickening (17) on the inside, seen in the axial direction of the sealing bellows (7), which thickening rests on one end face of the clamping ring (11) after assembly of the sealing bellows (7) so that one thickening (15, 17) comes to rest on each end face of the clamping ring (11).

2. Ball joint according to Claim 1, characterised in that the thickening (15) on the outside, seen in the axial direction of the sealing bellows, of the housing-side bellows edge (10) is of approximately wedge-shaped construction in cross-section with a wall thickness increasing towards the bellows end (16).

3. Ball joint according to one of Claims 1 to 2, characterised in that the thickening (17) on the inside, seen in the axial direction of the sealing bellows, of the housing-side bellows edge (10) is of approximately wedge-shaped construction with a wall thickness increasing away from the bellows end (16).

4. Ball joint according to one of Claims 1 to 3, characterised in that the circumferential annular groove (12) of the joint housing (1) is constructed as a wedge-shaped groove.

5. Ball joint according to Claim 4, characterised in that the wedge-shaped groove has an opening angle of 60°.

6. Ball joint according to one of Claims 4 and 5 in conjunction with Claims 2 and 3, characterised in that the total of the wedge angles of the two wedge-shaped thickenings (15, 17) of the housing-side bellows edge (10) of the sealing bellows (7) is approximately equal to the opening angle of the wedge-shaped groove.

7. Ball joint according to one of Claims 1 to 6, characterised in that the sealing bellows (7) has a lip (13) extending around the inside adjacent to the housing-side bellows edge (10) which is of approximately cylindrical construction prior to its being fixed in the annular groove (12), which lip rests on the end face (14) of the joint housing (1), from which the ball pivot (5) projects.

8. Ball joint according to one of Claims 1 to 7, characterised in that the sealing bellows (7) has one or more lips (18) or bulges (19) extending around its outer surface adjacent to the housing-side bellows edge (10) which is of approximately cylindrical construction prior to its being fixed in the annular groove (12), which lips or bulges cover the clamping ring (11) on the outside when the sealing bellows (7) is fixed.

**Revendications**

1. Joint à rotule comportant un pivot (5) mobile en rotation ou angulairement, dépassant d'un boîtier de joint (1), l'ouverture (6) située entre le boîtier de joint (1) et le pivot (5) étant fermée par un soufflet d'étanchéité (7) en élastomère, qui s'applique de manière étanche contre le pivot (5) par un bord de soufflet (8) côté pivot, qui est fixé sur un bord de soufflet (10) côté boîtier dans une rainure annulaire (12) suivant le pourtour du boîtier de joint (1), au moyen d'une bague de serrage (11) exerçant une pression sur son enveloppe extérieure et présentant deux faces frontales en direction axiale, et le bord de soufflet (10) côté boîtier présentant un diamètre intérieur qui est légèrement plus grand que le diamètre extérieur de la rainure annulaire (12), caractérisé en ce que le bord de soufflet (10) côté boîtier est à peu près cylindrique avant d'être fixé dans la rainure annulaire (12) et est rentré dans la rainure annulaire (12) par la bague de serrage (11), pendant le montage du soufflet d'étanchéité (7), en ce que le bord de soufflet (10) côté boîtier présente une surépaisseur (15) périphérique, située à l'extérieur, vue dans la direction axiale du soufflet d'étanchéité (7), laquelle surépaisseur s'applique contre une face frontale de la bague de serrage (11), après le montage du soufflet d'étanchéité (7), en ce que le bord de soufflet (10) côté boîtier présente une autre surépaisseur (17) périphérique, située à l'intérieur, vue en direction axiale du soufflet d'étanchéité (7), laquelle surépaisseur s'applique contre une face frontale de la bague de serrage (11), après montage du soufflet d'étanchéité (7), de sorte qu'une surépaisseur (15, 17) vient s'appliquer contre les deux faces frontales de la bague de serrage (11).

2. Joint à rotule selon la revendication 1, caractérisé en ce que la surépaisseur (15) extérieure, vue en direction axiale du soufflet d'étanchéité, du bord de soufflet (10) côté boîtier, a une section transversale à peu près conique avec une épaisseur de paroi augmentant vers l'extrémité de soufflet (16).

3. Joint à rotule selon la revendication 1 ou 2, caractérisé en ce que la surépaisseur (17) intérieure, vue en direction axiale du soufflet d'étanchéité, du bord de soufflet (10) côté boîtier a une section transversale à peu près conique avec une épaisseur de paroi augmentant à partir de l'extrémité de soufflet (16).

4. Joint à rotule selon l'une des revendications 1 à 3, caractérisé en ce que la rainure annulaire (12) périphérique du boîtier de joint (1) est une rainure de clavette.

5. Joint à rotule selon la revendication 4, caractérisé en ce que la rainure de clavette présente un angle d'ouverture de 60°.

6. Joint à rotule selon la revendication 4 ou 5 en liaison avec les revendications 2 et 3, caractérisé en ce que la somme des angles des deux surépaisseurs (15, 17) coniques du bord de soufflet (10) côté boîtier du soufflet d'étanchéité (7) est à peu près égale à l'angle d'ouverture de la rainure de clavette.

7. Joint à rotule selon l'une des revendications 1 à 6, caractérisé en ce que le soufflet d'étanchéité (7) présente une lèvre (13) périphérique intérieure, adjacente au bord de soufflet (10) côté boîtier, à peu près cylindrique avant sa fixation dans la rainure annulaire (12), laquelle lèvre s'applique contre la face frontale (14) du boîtier de joint (1) duquel dépasse le pivot (5).

8. Joint à rotule selon l'une des revendications 1 à 7, caractérisé en ce que le soufflet d'étanchéité (7) présente une ou plusieurs lèvres (18) périphériques ou bourrelets (19), adjacents au bord de soufflet (10) côté boîtier, à peu près cylindrique avant sa fixation dans la rainure annulaire (12), lesquelles lèvres ou bourrelets recouvrent de l'extérieur la bague de serrage (11), lorsque le soufflet d'étanchéité (7) est fixé.

Fig.1

Fig.2

Fig. 3

Fig.4

Fig.5